# EUROPEAN PATENT SPECIFICATION

(11) **EP 2 977 173 B1**
(45) Date of publication and mention of the grant of the patent: **16.05.2018**
(21) Application number: 13878572.0
(22) Date of filing: 28.04.2013
(51) Int. Cl.: B29C 49/56, B29L 22/00

(54) **LINKAGE MECHANISM BETWEEN LIFTING AND BILATERAL POSITIONING OF BOTTOM DIE**
GESTÄNGEMECHANISMUS ZWISCHEN HEBEN UND BILATERALEM POSITIONIEREN EINES UNTERGESENKS
MÉCANISME DE LIAISON ENTRE LE LEVAGE ET LE POSITIONNEMENT BILATÉRAL D'UNE MATRICE INFÉRIEURE

(30) Priority: 19.03.2013 CN 201310088982
(43) Date of publication of application: 27.01.2016
(73) Proprietor: Jiangsu Newamstar Packaging Machinery Co., Ltd, Zhangjiagang, Jiangsu 215624 (CN)
(72) Inventor: DONG, Hailong, Jiangsu 215624 (CN); CAI, Tongjing, Jiangsu 215624 (CN); CHU, Xingan, Jiangsu 215624 (CN); HE, Deping, Jiangsu 215624 (CN)
(74) Representative: Baker, Thomas Edward
(86) International application number: PCT/CN2013/074985
(87) International publication number: WO 2014/146329

(56) References cited:
- CN-A- 102 962 989
- CN-A- 103 171 127
- CN-U- 203 157 116
- CN-U- 203 157 124
- US-A1- 2007 292 550
- US-A1- 2010 203 185
- US-B1- 6 805 548
- US-B2- 7 241 130

## Description

### Field of the Invention

The present invention relates to the field of a processing device for a beverage bottle, and more particularly to an elevating and positioning mechanism for a bottom mould of a bottle blowing machine.

### Description of the Related Art

A bottle blowing machine of the prior art generally comprises a machine frame, a left mould, a right mould and a bottom mould which are disposed on the machine frame, as well as a driving mechanism and a positioning mechanism. A bottom mould locking mechanism of a linear bottle blowing machine, as disclosed in patent publication No. CN 201755911U, comprises a mould mounting plate, a bottle mould, a bottom mould, an actuating mechansim, a positioning mechanism and a supporting seat. The end of the cavity of the bottle mould is sleeved with the bottom mould which is connected with the actuating mechanism. The positioning mechanism is horizontally disposed on the support seat and comprises a positioning block air cylinder and a positioning block connected with each other. The actuating mechanism comprises a bottom mould mounting plate and a bottom mould elevating air cylinder. An upper surface of the bottom mould mounting plate is connected with the bottom mould, and a lower surface of the bottom mould mounting plate is connected with the bottom mould elevating air cylinder which is mounted on a support frame. From this, three driving mechanisms are required in the bottom mould locking mechanism of the above patent, and this will increase the energy consumption and make the whole device bulky.

US2007/0292550 describes a device for blow molding containers. Initially, pre-forms, which are made of a thermoplastic material, are tempered and, subsequently, transformed into containers inside a blow form using the effects of a pressurized medium. Said blow form which is made up of at least two blow molding segments is held in place by mold supports of a blowing station. A bottom part is used in addition to the blow molding segments. Both the mold supports (19, 20) and the bottom part (7) are arranged in such a way that they can be mechanically positioned. The mold supports and the bottom part are permanently coupled to each other via a common mechanical drive unit (43).

US2010/0203185 describes a device for blow molding containers. The temperature of parisons, which are made of a thermoplastic material, is adjusted and the parisons are then molded in a blow mold under the effect of a pressurized medium to give containers. The blow mold which is composed of at least two blow mold segments is held in place by mold supports of a blow molding station (3) that is arranged on a supporting structure (41). A bottom part (7) is used in addition to the blow mold segments. Both the mold supports and the bottom part are arranged in such a way that they can be mechanically positioned. The mold supports and the bottom part are mechanically coupled to each other. One of the mold supports (19) is immobile and the other mold support is swiveled to the supporting structure. The bottom part has a trajectory relative to the mold support which has a component that extends in the longitudinal direction of the blow molding station and a component that extends at a right angle to the longitudinal direction.

### Summary of the Invention

A technical problem to be solved by the invention is to provide an improved elevating and bilateral positioning linkage for a bottom mould.

In order to overcome the above technical problem, the following technical solution is utilized in the invention.

According to the present invention there is a system as defined in claim 1.

Preferably, the driving assembly also comprises a swing arm for connecting the rotation shaft with the power source, and the swing arm, the cam and the sliding part are located below the machine frame. Thus, the power source also can be arranged below the machine frame to effectively utilize the space below the machine frame.

Preferably, a first through-hole for the rotation shaft extending through therein and a second through-hole for the elevating rod extending through therein respectively are opened on the machine frame. The rotation member, the multiple swing members, the plurality of sliding blocks and the bottom mould are located above an upper surface of the machine frame.

Preferably, the plurality of sliding blocks comprise a first sliding block and a second sliding block, a firs guide rail and a second guide rail are provided on the machine frame, the first sliding block and the second sliding block respectively are slidable along the first guide rail and the second guide rail. The multiple swing members comprise a first swing member and a second swing member, the first swing member and a second swing member respectively and correspondingly drive the sliding of the first sliding block and the second sliding block. The sliding of the two sliding blocks are separately controlled by the swinging of the two swing members, this will simplify the controlling means.

More preferably, the firs sliding block and the second sliding block respectively are located at two opposites of the bottom mould. Two sliding blocks at two opposite sides of the bottom mould are utilized to achieve the bilateral positioning of the bottom mould, such that this positioning is more reliable.

Still more preferably, the rotation member has a first guiding surface and a second guiding surface on its' side surface, a first projection protruding towards the rotation member is formed on the first swing member, a second projection protruding towards the rotation member is formed on the second swing member. In the course of rotation of the rotation member (7) relative to the machine frame, the first projection slidably contacts with the first guiding surface, the second projection slidably contacts with the second guiding surface, and the distance between the contact position of the first guiding surface with the first projection and the first axis and the distance between the contact position of the second guiding surface with the second projection and the first axis respectively change with the rotation of the rotation member. The change in distance produces a guiding effect on the projections, such that the projections move and the two swing members swing correspondingly.

More preferably, a first protrusion is formed on the first sliding block and a second protrusion is formed on the second sliding block, a first sliding groove is opened on the first swing member at a distance from the connection position of the first swing member with the machine frame, and a second sliding groove is opened on the second swing member at a distance from the connection position of the second swing member with the machine frame, the first protrusion is slidably inserted into the first sliding groove and the second protrusion is slidably inserted into the second sliding groove. A transmission fork configuration is formed on each of the two swing members at a position where the sliding groove is opened, and the swing members control the sliding of the sliding block by means of the transmission fork configurations.

In a specific embodiment, an elastic member is arranged between each of the swing members and the machine frame for providing a restoring force for the swing member. For example, in the course of rotation of the rotating member, when the contact positions of the projections with the guiding surfaces get farther and farther away from the first axis, the swing members are pushed by the rotating member to swing. Otherwise, in the course of rotation of the rotating member, when the contact positions of the projections with the guiding surfaces get nearer and nearer to the second axis, an external force is required to drive the swing member to swing, and the elastic member is used for providing such an external force. Certainly, the external force can be provided in other ways, for example, the swing member is driven by the rotating member.

Due to the above technical solution, the present invention has the following advantages as compared with the prior art: the linkage of the bottom mould elevating and positioning is achieved by means of a power source, this will save energy and reduce the volume of the whole device.

### Brief Description of the Drawings

Fig.1 is a schematic drawing showing an elevating and bilateral positioning linkage for a bottom mould according to the invention;
Fig.2 is top view of the fig. 1 , wherein the bottom mould descends;
Fig.3 is top view of the fig.1 when the bottom mould is positioned, wherein the bottom mould rises;
wherein: 1. a bottom mould; 2. a machine frame; 3. a positioning assembly; 4. a driving assembly; 5. a rotation shaft; 6. a cam; 7. a rotation member; 8. a guiding groove; 9. a swing arm; 12. an elevating rod; 13. a sliding part; 31. a first sliding block; 32. a second sliding block ; 33. a first guide rail; 34. a second guide rail; 35. a first swing member; 351. a first torsional spring; 36. a second swing member; 361. a second torsional spring; 37. a first projection; 38. a second projection; 41. a first protrusion; 42. a first sliding groove; 51. a second protrusion; 52. a second sliding groove; 71. a first guiding surface; 72. a second guiding surface.

### Description of the Preferred Embodiments

The present invention will be described hereinafter with reference to the accompanying drawings. It is to be noted, however, that the drawings are given only for illustrative purpose and therefore not to be considered as limiting of its scope, for the invention may admit to other equally effective embodiments.

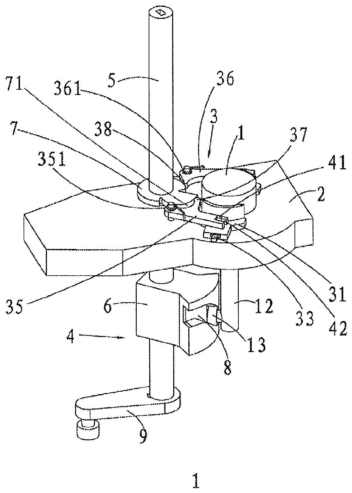

Fig.1 generally shows the structure of the bottom mould elevating assembly and the positioning assembly, these assemblies are mounted on a bottle blowing machine for use. The other parts of the bottle blowing machine are not involved by the main technical points of the invention and are well known by one skilled in the art, and thus not shown in fig.s. The mechanism shown in fig.1 comprises a machine frame 2, a bottom mould positioning assembly 3, and a driving assembly 4 for driving the elevating of the bottom mould. Generally the machine frame is provided with a mould blowing assembly (commonly used mechanism, not illustrated fully). The mould blowing assembly comprises a left mould and a right mould which can be closed or opened, and a bottom mould slidably disposed on the machine frame in up-down direction. When the mould is closed, the left and right moulds engage with each other and the bottom mould draws close to the left and right moulds, such that the three moulds together enclose to provide a cavity. When the mould is opened, the three moulds are separated to open the cavity.

As shown in fig.s, the driving assembly 4 comprises a rotation shaft 5 rotatably disposed on the machine frame 2 around it's own axis, a cam 6 fixedly connected with the lower portion of the rotation shaft 5, and a power source for driving the rotation of the rotation shaft 5. A first sliding groove 8 is opened on the cam 6. In the embodiment shown in fig.1, the driving assembly 4 also comprises a swing arm 9 for connecting the rotation shaft 5 with the power source.

The bottom mould 1 is disposed on the upper end of an elevating rod 12, and a sliding part 13 slidable along the first guiding groove 8 is provided on the lower portion of the elevating rod 12, as shown in fig.1. The bottom mould 1, the elevating rod 2 and the sliding part 13 can be integrated as one piece.

All of the cam 6, the power source, the swing arm 9 and the sliding part 13 are located below the machine frame 2, such that the space below the machine frame 2 can be effectively utilized.

In the course of rotation of the rotation shaft 5, the guiding groove 8 contacts and supports the sliding part 13, with the rotation of the rotation shaft 5, the position of the guiding groove supporting the sliding part 13 rises or descends, such that the sliding part 13 moves in up-down direction under the guiding of the guiding groove 8. Correspondingly, the elevating rod 2 drives the elevating of the bottom mould 1.

In the preferable embodiment shown in fig.1, the axis of rotation of the rotation shaft 5 (namely, the shaft axis of the rotation shaft 5) is parallel to the direction of movement of the elevating rod 12 relative to the machine frame 2. The guiding groove 8 inclinedly extends relative to the plane perpendicular to the axis of rotation. Herein, the term "inclinedly" means that the central axis of the guiding groove 8 representing the extending direction of the guiding groove 8 is not in the same circumference of the cross-section of the rotation shaft 5. The extending direction of the guiding groove 8 is neither parallel to the axis of rotation of the rotation shaft 5, nor vertical to the axis of rotation. In this case, in the course of rotation of the rotation shaft 5, the sliding part 13 slidably cooperating with the guiding groove 8 moves in up-down direction under the guiding of the guiding groove 4.

Fig.s 2-3 illustrate more clearly the configuration of the positioning assembly 3.The positioning assembly comprises a rotation member 7 fixedly disposed on the rotation shaft 5, multiple swing members 35 cooperating with the rotation member 7 and a plurality of sliding blocks slidable in horizontal direction. The multiple swing members are pivotally connected with machine frame 2.

Specifically, the sliding blocks comprise a first sliding block 31 and a second sliding block 32. The swing members comprise a first swing member 35 and a second swing member 36. The first sliding block 31 and the first swing member 35 constitutes a first positioning unit of the positioning assembly 3, the second sliding block 32 and the second swing member 36 constitutes a second positioning unit of the positioning assembly, and the first positioning unit and the second positioning unit are provided at two opposites of the bottom mould 1. The rotation member 7 has a first guiding surface 71 and a second guiding surface 72. a first projection 37 is formed on the first swing member 35 and a second projection 38 is formed on the second swing member 36, the first projection 37 slides along the first guiding surface 71 and the second projection 38 slides along the second guiding surface 72. The first guiding surface 71 can be configured as an evolvent-shaped structure as shown in fig.s 1-3. The distance between the outer edge of the cross-section of the guiding surface 71 along the line where the radius of the rotation shaft is and the shaft axis of the rotation shaft 5 becomes bigger and bigger or smaller and smaller clockwise. Certainly, the first guiding surface also can be configured as other curved configurations, for example, the second guiding surface 72 shown in fig.s 2-3. The second guiding surface 72 shown in fig.s 2-3 is configured as heteromorphism curved surface having a "peak" and a "trough", or alternatively, the second guiding surface also can be designed with reference to the first guiding surface 71. The first guiding surface 71 and the second guiding surface 72 are designed such that the distances between the shaft axis of the rotation shaft 5 and the contact positions of the two projections with the two guiding surfaces respectively change with the rotation of the rotation member 7, thereby leading to the swinging of the swing member 35.

The first positioning unit and the second positioning unit respectively also comprise a linear first guide rail and a linear second guide rail extending horizontally, the firs sliding block 31 and the second sliding block 32 respectively are slidably provided along the first guide rail 33 and the second guide rail 34. A first protrusion 41 is formed on the first sliding block 31 and a second protrusion 51 is formed on the second sliding block 32, a first sliding groove 42 is opened on the first swing member 35 at a distance from the connection position of the first swing member 35 with the machine frame 2, and a second sliding groove 52 is opened on the second swing member 36 at a distance from the connection position of the second swing member 36 with the machine frame 2, the first protrusion 41 is slidably inserted into the first sliding groove 42 and the second protrusion 51 is slidably inserted into the second sliding groove 52. The portions of the two swing members where the sliding grooves are opened respectively form transmission fork configurations for driving the sliding of the sliding blocks on the guide rails.

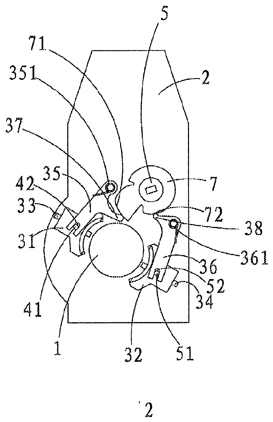

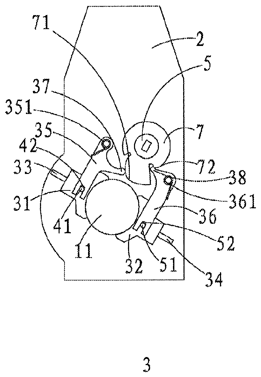

Preferably, a first torsional spring 351 is arranged between the first swing member 35 and the machine frame 2 and a second torsional spring 361 is arranged between the second swing member 36 and the machine frame 2, and the two torsional springs respectively are used for providing a restoring force for the first swing member 35 and the second swing member 36. Referring to the conversion from fig.2 to fig.3, the rotation member 7 rotates anticlockwise, due to the guiding effects (from "peak" to "trough") of the first guiding surface 71 and the second guiding surface 72, the first projection 37 and the second projection 38 contacting with them move towards the shaft axis of the rotation shaft 5 (namely, the axis of rotation of the rotation shaft 5 relative to the machine frame 2), at this time, the first swing member 35 rotates anticlockwise under the acting force of the first torsional spring 351, the second swing member 36 rotates clockwise under the acting force of the second torsional spring 361, and the transmission fork portions of the two swing members drive the two sliding blocks to move along the guide rails into the position shown in fig.3, that is to say, the two sliding blocks are inserted between the bottom mould 1 and the machine frame 2 and contacts the bottom mould 1 to position the bottom mould 1. Again referring to the conversion from fig.3 to fig.2, the rotation member 7 rotates clockwise, the contact position of the first guiding surface 71 with the first projection 37 is farther and farther from the shaft axis of the rotation shaft 5, and the contact position of the second guiding surface 72 with the second projection 38 also is converted from "trough" to "peak", such that the two projections are pushed to move. In this course, the first swing member 35 overcomes the acting force of the torsional spring 351 to rotate clockwise and the second swing member 36 overcomes the acting force of the torsional spring 361 to rotate anticlockwise, and the two sliding blocks respectively are driven by the two transmission fork portions to move into the position shown in fig.2, that is to say, the two sliding blocks are detached from the bottom mould 1 to release the bottom mould 1.
When the mould blowing assembly is in the mould closing state, the bottom mould 1 rises relative to the machine frame 2, such that there is a certain distance between the bottom mould 1 and the machine frame 2, the sliding blocks are inserted between the bottom mould 1 and the machine frame 2 and contact against the bottom mould 1. When the mould blowing assembly is in the mould opening state, the power source drives the rotation shaft 5 to rotate, and the rotation shaft 5 drives the rotation of the cam 6 and the rotation member 7. When the rotation member 7 rotates, the firs projection 37 slides along the first guiding surface 71 and the second projection 38 slides along the second guiding surface 72, such that the first swing member 35 and the second swing member 36 swing relative to the machine frame 2, the first sliding block 31 and the second sliding block 32 respectively t slide along the first guide rail 33 and the second guide rail 34, then the positioning assembly is opened. At this time, the cam 6 rotates with the rotation shaft 5, the sliding part 13 slides along the guiding groove 8 such that the bottom mould descends and the mould opening is reached.

## Claims

1. A system comprising:
a bottle blow moulding machine having a machine frame (2) and an elevating and bilateral positioning linkage for a bottom mould (1), mounted on the bottle blowing machine,
the linkage comprising:
a bottom mould elevating assembly and a positioning assembly (3), the bottom mould elevating assembly comprising:
an elevating rod (12) movably disposed on the machine frame (2) of the bottle blowing machine in an up-down direction, the bottom mould (1) being mounted on an upper end of the elevating rod (12), wherein the elevating rod (12) is driven by a driving assembly (4) to move in the up-down direction,
the driving assembly(4) comprising:
a rotation shaft (5) rotatably disposed on the machine frame (2) around a first axis;
a power source for driving the rotation of the rotation shaft (5); **characterized in that** the driving assembly (4) further comprises:
a cam (6) fixedly connected on the rotation shaft (5), a guiding groove (8) being opened on the cam (6);
a sliding part (13) mounted on the elevating rod (12), the sliding part (13) being slidably inserted into the sliding groove (8); and
whereby in the course of rotation of the rotation shaft (5), the contact position of the guiding groove (8) with the sliding part (13) rises or descends relative to the machine frame, the sliding part (13) moves in up-down direction under the guiding of the guiding groove (8); and
the positioning assembly (3) comprising:
a plurality of sliding blocks slidably disposed on the machine frame (2);
multiple swing members (35) swingably disposed on the machine frame (2), for driving the movement of the sliding blocks during their swinging; and
a rotation member (7) fixedly disposed on the rotation shaft (5) for controlling the swinging of the swing members (35);
the linkage having at least two working positions,
wherein in the first working position, there is a certain distance between the bottom mould (1) and the machine frame (2), and the plurality of sliding blocks are inserted between the bottom mould (1) and the machine frame (2) and contact against the bottom mould (1), in the second working position, the sliding blocks are separated from the bottom mould (1) and move towards the machine frame (2).

2. The system as claimed in claim 1, wherein the driving assembly (4) also comprises a swing arm (9) for connecting the rotation shaft (5) with the power source, the swing arm (9), the cam (6) and the sliding part (13) being located below the machine frame (2).

3. The system as claimed in claim 1 or 2, wherein a first through-hole for the rotation shaft (5) extending through therein and a second through-hole for the elevating rod (12) extending through therein respectively are opened on the machine frame (2), the rotation member (7), the multiple swing members, the plurality of sliding blocks and the bottom mould (1) being located above an upper surface of the machine frame (2).

4. The system as claimed in claim 1, wherein the plurality of sliding blocks comprise a first sliding block (31) and a second sliding block (32), a first guide rail (33) and a second guide rail (34) are provided on the machine frame (2), the first sliding block (31) and the second sliding block (32) respectively being slidable along the first guide rail (33) and the second guide rail (34), the multiple swing members comprising a first swing member (35) and a second swing member (36), the first swing member (35) and a second swing member (36) respectively and correspondingly driving the sliding of the first sliding block (31) and the second sliding block (32).

5. The system as claimed in claim 4, wherein the firs sliding block (31) and the second sliding block (32) respectively are located at two opposites of the bottom mould (1).

6. The system as claimed in claim 4, wherein the rotation member (7) has a first guiding surface (71) and a second guiding surface (72) on it's side surface, a first projection (37) protruding towards the rotation member (7) is formed on the first swing member (35), a second projection (38) protruding towards the rotation member (7) is formed on the second swing member (36), in the course of rotation of the rotation member (7) relative to the machine frame, the first projection (37) slidably contacts with the first guiding surface (71), the second projection (38) slidably contacts with the second guiding surface (72), and the distance between the contact position of the first guiding surface (71) with the first projection (37) and the first axis and the distance between the contact position of the second guiding surface (72) with the second projection (38) and the first axis respectively change with the rotation of the rotation member (7).

7. The system as claimed in claim 4, wherein a first protrusion (41) and a second protrusion (51) respectively are formed on the first sliding block (31) and the second sliding block (32), a first sliding groove (42) being opened on the first swing member (35) at a distance from the connection position of the first swing member (35) with the machine frame (2), and a second sliding groove (52) being opened on the second swing member (36) at a distance from the connection position of the second swing member (36) with the machine frame (2), the first protrusion (41) being slidably inserted into the first sliding groove (42) and the second protrusion (51) being slidably inserted into the second sliding groove (52).

8. The system as claimed in any of claims 1-2 and 4-7, wherein an elastic member is arranged between each of the swing members (35) and the machine frame (2).

## Patentansprüche

1. System, umfassend:
eine Flaschenblasformmaschine, die einen Maschinenrahmen (2) und ein Gestänge zum Heben und bilateralen Positionieren für eine Bodenform (1) aufweist, die an der Flaschenblasmaschine befestigt ist,
wobei das Gestänge Folgendes umfasst:
eine Bodenformhebeanordnung und eine Positionieranordnung (3), wobei die Bodenformhebeanordnung Folgendes umfasst:
eine Hebestange (12), die auf bewegliche Weise an dem Maschinenrahmen (2) der Flaschenblasmaschine in einer auf- und absteigenden Richtung angeordnet ist, wobei die Bodenform (1) an einem oberen Ende der Hebestange (12) befestigt ist, wobei die Hebestange (12) durch eine Antriebsanordnung (4) angetrieben wird, um sich in der auf- und absteigenden Richtung zu bewegen,
wobei die Antriebsanordnung (4) Folgendes umfasst:
eine Drehwelle (5), die um eine erste Achse auf drehbare Weise an dem Maschinenrahmen (2) angeordnet ist,
eine Stromquelle zum Antreiben der Drehung der Drehwelle (5), **dadurch gekennzeichnet, dass** die Antriebsanordnung (4) ferner Folgendes umfasst:
einen Nocken (6), der fest mit der Drehwelle (5) verbunden ist, wobei eine Führungsnut (8) an dem Nocken (6) geöffnet ist,
ein Gleitteil (13), das an der Hebestange (12) befestigt ist, wobei das Gleitteil (13) auf gleitende Weise in der Gleitnut (8) eingesetzt ist, und
wodurch im Laufe der Drehung der Drehwelle (5) die Berührungsposition der Führungsnut (8) mit dem Gleitteil (13) relativ zu dem Maschinenrahmen nach oben oder unten steigt, wobei sich das Gleitteil (13) unter der Führung der Führungsnut (8) in auf- und absteigender Richtung bewegt, und
wobei die Positionieranordnung (3) Folgendes umfasst:
eine Vielzahl von Gleitstücken, die auf gleitende Weise an dem Maschinenrahmen (2) angeordnet sind,
mehrere Schwingelemente (35), die auf schwingende Weise an dem Maschinenrahmen (2) angeordnet sind, um die Bewegung der Gleitstücke, während diese schwingen, anzutreiben, und
ein Drehelement (7), das fest an der Drehwelle (5) angeordnet ist, um das Schwingen der Schwingelemente (35) zu steuern,
wobei das Gestänge wenigstens zwei Arbeitsstellungen aufweist,
wobei in der ersten Arbeitsstellung ein bestimmter Abstand zwischen der Bodenform (1) und dem Maschinenrahmen (2) vorhanden ist und die Vielzahl von Gleitstücken zwischen der Bodenform (1) und dem Maschinenrahmen (2) eingesetzt ist und die Bodenform (1) berühren und in der zweiten Arbeitsstellung die Gleitstücke von der Bodenform (1) getrennt sind und sich hin zu dem Maschinenrahmen (2) bewegen.

2. System nach Anspruch 1, wobei die Antreibungsanordnung (4) außerdem einen Schwinghebel (9) umfasst, um die Drehwelle (5) mit der Stromquelle zu verbinden, wobei sich der Schwinghebel (9), der Nocken (6) und das Gleitteil (13) unterhalb des Maschinenrahmens (2) befinden.

3. System nach Anspruch 1 oder 2, wobei eine erste Durchgangsbohrung für die Drehwelle (5), die sich durch dieselbe erstreckt, und eine zweite Durchgangsbohrung für die Hebestange (12), die sich durch dieselbe erstreckt, jeweils an dem Maschinenrahmen (2) geöffnet sind, wobei sich das Drehelement (7), die mehreren Schwingelemente, die Vielzahl von Gleitstücken und die Bodenform (1) über einer oberen Fläche des Maschinenrahmens (2) befinden.

4. System nach Anspruch 1, wobei die Vielzahl von Gleitstücken ein erstes Gleitstück (31) und ein zweites Gleitstück (32) umfasst, wobei eine erste Führungsschiene (33) und eine zweite Führungsschiene (34) an dem Maschinenrahmen (2) vorgesehen sind, wobei das erste Gleitstück (31) und das zweite Gleitstück (32) jeweils entlang der ersten Führungsschiene (33) und der zweiten Führungsschiene (34) gleitbar sind, wobei die mehreren Schwingelemente ein erstes Schwingelement (35) und ein zweites Schwingelement (36) umfassen, wobei das erste Schwingelement (35) und ein zweites Schwingelement (36) jeweils entsprechend das Gleiten des ersten Gleitstücks (31) und des zweiten Gleitstücks (32) antreiben.

5. System nach Anspruch 4, wobei sich das erste Gleitstück (31) und das zweite Gleitstück (32) jeweils auf zwei gegenüberliegenden Seiten der Bodenform (1) befinden.

6. System nach Anspruch 4, wobei das Drehelement (7) eine erste Führungsfläche (71) und eine zweite Führungsfläche (72) auf seiner Seitenfläche aufweist, wobei ein erster Vorsprung (37), der zu dem Drehelement (7) vorsteht, an dem ersten Schwingelement (35) ausgebildet ist, wobei ein zweiter Vorsprung (38), der zu dem Drehelement (7) vorsteht, an dem zweiten Schwingelement (36) ausgebildet ist, wobei im Verlauf der Drehung des Drehelements (7) relativ zu dem Maschinenrahmen der erste Vorsprung (37) auf gleitende Weise die erste Führungsfläche (71) berührt, der zweite Vorsprung (38) auf gleitende Weise die zweite Führungsfläche (72) berührt und sich der Abstand zwischen der Berührungsposition der ersten Führungsfläche (71) mit dem ersten Vorsprung (37) und der ersten Achse und der Abstand zwischen der Berührungsposition der zweiten Führungsfläche (72) mit dem zweiten Vorsprung (38) und der ersten Achse jeweils mit der Drehung des Drehelements (7) ändern.

7. System nach Anspruch 4, wobei ein erster Vorsprung (41) und ein zweiter Vorsprung (51) jeweils an dem ersten Gleitstück (31) und dem zweiten Gleitstück (32) ausgebildet sind, wobei eine erste Führungsnut (42) an dem ersten Schwingelement (35) in einem Abstand von der Verbindungsposition des ersten Schwingelements (35) mit dem Maschinenrahmen (2) geöffnet ist und wobei eine zweite Führungsnut (52) an dem zweiten Schwingelement (36) in einem Abstand von der Verbindungsposition des zweiten Schwingelements (36) mit dem Maschinenrahmen (2) geöffnet ist, wobei der erste Vorsprung (41) auf gleitende Weise in der ersten Gleitnut (42) eingesetzt ist und der zweite Vorsprung (51) auf gleitende Weise in der zweiten Gleitnut (52) eingesetzt ist.

8. System nach einem der Ansprüche 1 bis 2 und 4 bis 7, wobei ein elastisches Element zwischen jedem der Schwingelemente (35) und dem Maschinenrahmen (2) angeordnet ist.

## Revendications

1. Système comprenant :
une machine de moulage par soufflage de bouteilles ayant un cadre de machine (2) et une liaison de levage et de positionnement bilatéral pour un moule inférieur (1), montée sur la machine de soufflage de bouteilles,
la liaison comprenant :
un ensemble de levage de moule inférieur et un ensemble de positionnement (3), l'ensemble de levage de moule inférieur comprenant :
une tige de levage (12) disposée de manière déplaçable de haut en bas sur le cadre de machine (2) de la machine de soufflage de bouteilles, le moule inférieur (1) étant monté sur une extrémité supérieure de la tige de levage (12), la tige de levage (12) étant entraînée par un ensemble d'entraînement (4) pour se déplacer de haut en bas,
l'ensemble d'entraînement (4) comprenant :
un arbre rotatif (5) disposé de manière rotative sur le cadre de machine (2) autour d'un premier axe ;
une source de puissance pour entraîner la rotation de l'arbre rotatif (5) ; **caractérisé en ce que** l'ensemble d'entraînement (4) comprend en outre :
une came (6) connectée fixement sur l'arbre rotatif (5), une gorge de guidage (8) étant réalisée sur la came (6) ;
une partie coulissante (13) montée sur la tige de levage (12), la partie coulissante (13) étant insérée de manière coulissante dans la gorge de glissement (8) ; et
au cours de la rotation de l'arbre rotatif (5), la position de contact de la gorge de guidage (8) avec la partie coulissante (13) montant ou descendant par rapport au cadre de machine, la partie coulissante (13) se déplaçant de haut en bas tout en étant guidée par la gorge de guidage (8) ; et
l'ensemble de positionnement (3) comprenant :
une pluralité de blocs coulissants disposés de manière à pouvoir coulisser sur le cadre de machine (2) ;
une pluralité d'organes oscillants (35) disposés de manière à pouvoir osciller sur le cadre de machine (2), pour entraîner le mouvement des blocs coulissants au cours de leur oscillation ; et
un organe rotatif (7) disposé fixement sur l'arbre rotatif (5) pour commander l'oscillation des organes oscillants (35) ;
la liaison ayant au moins deux positions de travail,
dans la première position de travail, une certaine distance existant entre le moule inférieur (1) et le cadre de machine (2), et la pluralité de blocs coulissants étant insérés entre le moule inférieur (1) et le cadre de machine (2) et venant en contact contre le moule inférieur (1), dans la deuxième position de travail, les blocs coulissants étant séparés du moule inférieur (1) et se déplaçant vers le cadre de machine (2).

2. Système selon la revendication 1, dans lequel l'ensemble d'entraînement (4) comprend également un bras oscillant (9) pour connecter l'arbre rotatif (5) à la source de puissance, le bras oscillant (9), la came (6) et la partie coulissante (13) étant situés en dessous du cadre de machine (2).

3. Système selon la revendication 1 ou 2, dans lequel un premier trou traversant pour l'arbre rotatif (5) s'étendant à travers celui-ci et un deuxième trou traversant pour la tige de levage (12) s'étendant à travers celle-ci, respectivement, sont réalisés sur le cadre de machine (2), l'organe rotatif (7), la pluralité d'organes oscillants, la pluralité de blocs coulissants et le moule inférieur (1) étant situés au-dessus d'une surface supérieure du cadre de machine (2).

4. Système selon la revendication 1, dans lequel la pluralité de blocs coulissants comprennent un premier bloc coulissant (31) et un deuxième bloc coulissant (32), un premier rail de guidage (33) et un deuxième rail de guidage (34) sont prévus sur le cadre de machine (2), le premier bloc coulissant (31) et le deuxième bloc coulissant (32), respectivement, pouvant coulisser le long du premier rail de guidage (33) et du deuxième rail de guidage (34), la pluralité d'organes oscillants comprenant un premier organe oscillant (35) et un deuxième organe oscillant (36), le premier organe oscillant (35) et un deuxième organe oscillant (36), respectivement et de manière correspondante, entraînant le coulissement du premier bloc coulissant (31) et du deuxième bloc coulissant (32) .

5. Système selon la revendication 4, dans lequel le premier bloc coulissant (31) et le deuxième bloc coulissant (32), respectivement, sont situés au niveau de deux parties opposées du moule inférieur (1) .

6. Système selon la revendication 4, dans lequel l'organe rotatif (7) présente une première surface de guidage (71) et une deuxième surface de guidage (72) sur sa surface latérale, une première saillie (37) faisant saillie vers l'organe rotatif (7) étant formée sur le premier organe oscillant (35), une deuxième saillie (38) faisant saillie vers l'organe rotatif (7) étant formée sur le deuxième organe oscillant (36), au cours de la rotation de l'organe rotatif (7) par rapport au cadre de machine, la première saillie (37) venant en contact de coulissement avec la première surface de guidage (71), la deuxième saillie (38) venant en contact de coulissement avec la deuxième surface de guidage (72) et la distance entre la position de contact de la première surface de guidage (71) avec la première saillie (37) et le premier axe, et la distance entre la position de contact de la deuxième surface de guidage (72) avec la deuxième saillie (38) et le premier axe, respectivement, variant avec la rotation de l'organe rotatif (7).

7. Système selon la revendication 4, dans lequel une première saillie (41) et une deuxième saillie (51), respectivement, sont formées sur le premier bloc coulissant (31) et le deuxième bloc coulissant (32), une première gorge de coulissement (42) étant réalisée sur le premier organe oscillant (35) à une certaine distance de la position de connexion du premier organe oscillant (35) avec le cadre de machine (2), et une deuxième gorge de coulissement (52) étant réalisée sur le deuxième organe oscillant (36) à une certaine distance de la position de connexion du deuxième organe oscillant (36) avec le cadre de machine (2), la première saillie (41) étant insérée de manière coulissante dans la première gorge de coulissement (42) et la deuxième saillie (51) étant insérée de manière coulissante dans la deuxième gorge de coulissement (52).

8. Système selon l'une quelconque des revendications 1 à 2 et 4 à 7, dans lequel un organe élastique est disposé entre chacun des organes oscillants (35) et le cadre de machine (2).
